(19) Europäisches Patentamt
European Patent Office
Office européen des brevets

(11) **EP 2 084 705 B1**

(12) **EUROPEAN PATENT SPECIFICATION**

(45) Date of publication and mention
of the grant of the patent:
**23.03.2011 Bulletin 2011/12**

(51) Int Cl.:
***G11B 7/125*** (2006.01)

(21) Application number: **07826261.5**

(86) International application number:
**PCT/IB2007/053567**

(22) Date of filing: **05.09.2007**

(87) International publication number:
**WO 2008/029353 (13.03.2008 Gazette 2008/11)**

(54) **METHOD AND APPARATUS FOR PERFORMING A WRITING POWER CALIBRATION**

VERFAHREN UND VORRICHTUNG ZUM DURCHFÜHREN EINER SCHREIBLEISTUNGSKALIBRATION

PROCÉDÉ ET APPAREIL D'ÉTALONNAGE DE PUISSANCE D'ÉCRITURE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.09.2006 EP 06120275**

(43) Date of publication of application:
**05.08.2009 Bulletin 2009/32**

(73) Proprietor: **Koninklijke Philips Electronics N.V.**
**5621 BA Eindhoven (NL)**

(72) Inventors:
• **KLERK, Sander, J.**
**NL-5656 AE Eindhoven (NL)**

• **KUIJPER, Maarten**
**NL-5656 AE Eindhoven (NL)**
• **VAN ENDERT, Tony, P.**
**NL-5656 AE Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
**EP-A- 1 416 477       EP-A- 1 533 796**
**WO-A-2005/029479     US-A1- 2006 072 410**

**Description**

FIELD OF THE INVENTION

The invention relates to a method of performing a writing power calibration for optical recording on an optical storage medium and to an apparatus by which such a method can be performed. Particularly, the invention relates to a writing power calibration method on the basis of writing and reading information to and from a drive calibration zone on the optical storage medium.

BACKGROUND OF THE INVENTION

In an optical recorder the writing power of the laser beam should be determined in an optimum way once a new optical storage medium, i. e. an optical disc is inserted. Such a determination of the optimum power is performed by an optimum power control (OPC). The optimum power control of the laser beam is based on an asymmetry measurement (also named β measurement) and on a jitter measurement. The jitter calibration is used to find the optimum power, namely by setting the optimum power to a minimum jitter, while the β measurement is used to correct the writing power during the ongoing writing process. The latter is achieved by determining the slope of the curve relating the laser power with the asymmetry value at the target asymmetry. If a deviation of the β value during recording is noticed, the laser power is changed so as to correct for the shift in the β value. The β measurement is achieved by performing a laser power sweep, i. e. writing with a predetermined laser power profile, and then reading back the written data so as to determine the laser power dependent asymmetry. If for example a target β value of 4 % is desired, the corresponding optimum laser power $\alpha_{opt}$ can be derived.

Thus, the complete walking optimum power control (WOPC) relies on the β slope initially determined for each recorder-disc combination, hence making the β slope determination quality crucial for the recording result. Thus, when the track on which the power sweep for the asymmetry measurement is influenced by a neighbouring track, for example related to high power and/or a discontinuity in the power sweep, the β measurement result and therefore the WOPC can be seriously deteriorated.

US2006/072419A1 discloses a laser power selecting method includes the steps of recording an asymmetry nieasuring recording pattern in an optical disk trial-writing area while a laser power is being changed, reproducing a signal from the trial-writing area to calculate an asynunetry value from the waveform of the reproduced signal, determining the change rate of asymmetry from the relation between a laser power when the recording pattern is recorded and the calculated asymmetry value, and setting a laser power. at which the determined change rate of an asymmetry value is maximum, as a recording power used when recording on an optical disk.

It is therefore an object of the present invention to provide a method and an apparatus for improved optimum power control, particularly for avoiding a deteriorating influence during asymmetry measurement.

SUMMARY OF THE INVENTION

This object is solved by the method according to claim 1 and the apparatus according to claim 9. Further advantageous developments are outlined in the dependent claims.

In accordance with the invention there is provided a method of performing a writing power calibration for optical recording on an optical storage medium having a spiral track structure, comprising the steps of:

- selecting a first partition on the track structure having a first track and an adjacent second track that do both not contain written information on track portions within the first partition, wherein the second track may be neighboured by a third track that may have a track portion containing written information,
- writing to the track portion of the first track within the first partition using a predetermined writing power profile of a laser beam,
- reading information written to the first track within the first partition, and
- determining a relation between an asymmetry value and laser power on the basis of the writing power profile and the information read from the first track.

Thus, the power sweep and the reading back of the power for asymmetry or β measurement is performed on a track that is generally neighboured by two empty tracks. For example, in case that the calibration zone is located at the inner radii of the disc and the use of tracks for calibration is performed in the order of decreasing addresses (ADIP addresses), i. e. backwards with respect to the normal recording direction, the inner tracks of the disc are empty. According to the invention, not the empty track neighbouring a previously recorded track with higher addresses is chosen as the first track to be written to but the next track at a smaller radius or a track at even smaller radii than the mentioned next track. Consequently, the neighbouring empty tracks have no negative influence on the calibration result.

After the reading step, information is written to at least a track portion of the second track within a second partition and a track portion of the second track within a third partition of the second track using further predetermined writing power profiles, and a relation between jitter and laser power is determined on the basis of the writing power profiles and information read from the track portion of the fist track in the first partition, the track portion of the second track in the second partition, and the track portion of the second track in the third partition. The concept of the present invention according to which a track is left empty during asymmetry calibration is in contrast to conventional schemes in which no tracks are left empty in the disc calibration zone, so as to avoid a waste of disc space. According to the presently discussed preferred embodiment of the present invention, a waste of disc space can also be avoided, since the empty track is used in connection with the jitter measurement after β measurement. Particularly, both tracks, namely the first track on the basis of which the asymmetry measurement is performed, and the second track containing the so-called re-shuffled (for explanation: see below) power sweeps, are used for the purpose of jitter determination and the determination of the laser power that is related to the minimum jitter.

The size of the first partition is essentially twice the size of the second partition and essentially twice the size of the third partition. On this basis the re-shuffled power sweeps can be realized. If in the first partition a power sweep from a minimum value up to a maximum value is performed, it is possible to make two power sweeps in the neighbouring track, namely in the second and third partitions, that have essentially the same slope but different power levels at a particular angular position. For example, at the angular position at which in the first partition on the first track the power sweep starts with the minimum power value, the neighbouring re-shuffled power sweep starts at the half maximum power value. In the other neighbouring partition on the second track, the power sweep starts at minimum power and extends up to the half maximum power while in the adjacent region of the first track the power raises from the half maximum power to the maximum power.

This can be realized by a concept wherein the first partition essentially extends over 360 degrees and the second and third partitions each essentially extend over 180 degrees.

It is essential for jitter measurement that the power values of the writing power profiles in adjacent positions of the first and the second tracks are different. Thereby, inhomogeneities of the disc are averaged out.

With respect to the aim of a well behaving walking optimum power control (WOPC) the relation between the asymmetry value β and laser power α is approximated by $\beta = a\alpha^2 + b\alpha + c$.

On this basis, a walking optimum power control is performed by increasing or decreasing the laser power α by Δα on the basis of a difference Δβ between a measured asymmetry value and a target asymmetry value using the relation

$$\Delta\alpha = \frac{\partial\alpha}{\partial\beta} \cdot \Delta\beta_{wopc}$$

wherein

$$\frac{\partial\alpha}{\partial\beta} = \frac{1}{2a\alpha_{opt} + b}.$$

Thus, the relation between the asymmetry value β and the laser power α is first fitted by a curve of second order. Then, the slope of this curve is determined at the optimum laser power $\alpha_{opt}$. If a difference between the target asymmetry value and the measured asymmetry value is realized during recording, namely by reading back of recently recorded data, the difference being $\Delta\beta_{wopc}$, the laser power can be shifted by Δα in accordance with the above mentioned equation.

The method according to the present invention is particular useful in the case that the optical storage medium is a Blu-ray Disc (BD). The invention is not restricted to BD but can be used in connection with any media that are adapted for recording, e. g. CD, DVD, HD-DVD, single and double layered. However, the specification of BD with respect to the drive calibration zone allows readily implementing the present invention. If the drive calibration zone is located at the inner side of the disc, unrecorded tracks are present so that the calibration method can be performed on these tracks.

The present invention further relates to an apparatus for performing a writing power calibration for optical recording on an optical storage medium having a spiral track structure, comprising:

- means for selecting a first partition on the track structure having a first track and an adjacent second track that do both not contain written information on track portions within the first partition, wherein the second track may be neighboured by a third track that may have a track portion within the first partition containing written information,
- means for writing to the track portion of the first track within the first partition using a predetermined writing power profile of a laser beam,
- means for reading information written to the first track within the first partition, and
- means for determining a relation between an asymmetry value and laser power on the basis of the writing power profile and the information read from the first track.

These and other aspects of the invention will be apparent from and elucidated with reference to the embodiment described herein after.

BRIEF DESCRIPTION OF THE DRAWINGS

Figure 1 illustrates the track structure of a disc on which a method according to the present invention is performed.

Figure 2 illustrates a writing power profile used for determining an asymmetry value.

Figure 3 illustrates writing power profiles used for determining jitter.

Figure 4 shows a flow diagram illustrating a writing power calibration method according to the present invention.

Figure 5 shows a functional diagram illustrating a second order polynomial fit and a $\beta$ slope determination at the optimum laser power.

Figure 6 shows a flow diagram illustrating a walking optimum power control method used in connection with the present invention.

## DETAILED DESCRIPTION OF A PREFERRED EMBODIMENT

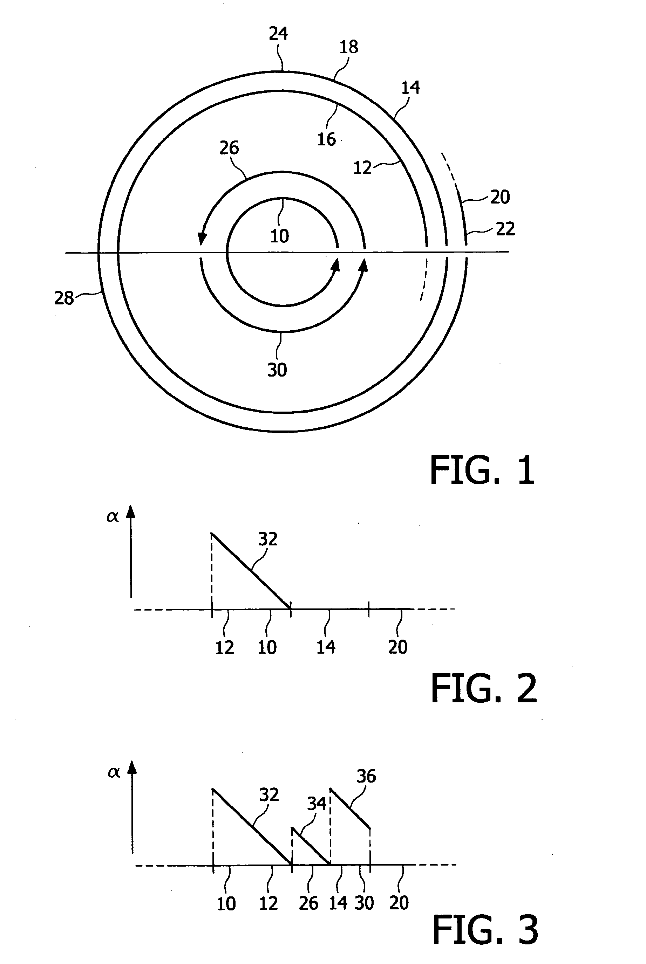

Figure 1 illustrates the track structure of a disc on which a method according to the present invention is performed. A drive calibration zone of an optical disc is illustrated. The disc has a spiral track structure. Two complete tracks, namely a first track 12 and a second track 14 are shown. Further, the beginning of a third track 20 is illustrated. The drive calibration zone can principally be located at any radius of the disc, but is preferably located at the inner side OPC area. The track structure can be continued in both directions, namely in extension of the third track 20 and to more inner radii from the first illustrated track 12. In order to distinguish between the tracks 12, 14, 20, the track structure is shown with gaps. In fact, the spiral is continuous. Partitions 10, 26, 30 are indicated by arrows. The partitions relate to angular sections of the disc. The first partition 10 extends over approximately 360 degrees, while the second partition 26 and the third partition 30 each extend over 180 degrees.

For determining a relation between an asymmetry value ($\beta$ value) and laser power, information is written on a portion 16 of the first track 12 within the first partition. In the present example, in which the first partition 10 extends over 360 degrees, the track portion 16 to which information is written is practically the whole first track 12. Before and immediately after writing to the first track 12, also the second track 14 or rather the track portion 18 of the second track 14 within the first partition 10 does not carry written information. Only the third track 20 and further tracks may contain written information within the track portion 22 within the first partition 10. Again, the track portions 18, 22 of the second track 14 and the third track 14, respectively, are practically the whole tracks 14, 22, since the first partition 10 extends over 360 degrees. After the information has been written to the first track 12, it is read back, and the reading process is not deteriorated by a neighbouring track that contains written information, since the second track 14 does not. On the basis of the laser power used and the information read from the first track, $\beta$ values can be determined in dependence on the laser power.

After the determination of the relation between the asymmetry value and the writing power, the second track 14 can be used for further calibration purposes. Thus, on a track portion 24 of the second track 14 within the second partition 26, a writing power sweep is performed. Similarly, a writing power sweep is performed on the track portion 28 of the second track 14 within the third partition 30. These power sweeps are re-shuffled with respect to the power sweep used for the previous writing to the first track 12 so as to average out inhomogeneities of the disc, in relation to the jitter measurement performed on the basis of the power sweeps in the three partitions 10, 26, 30. This will be further explained with respect to figures 2 and 3.

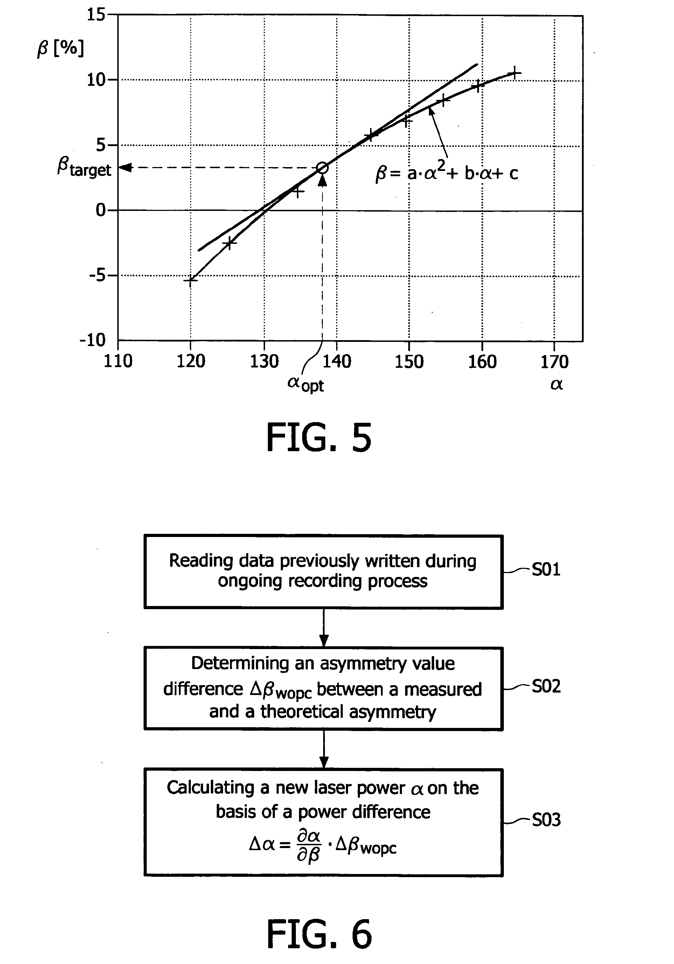

Figure 2 illustrates a writing power profile used for determining an asymmetry value. Figure 3 illustrates writing power profiles used for determining jitter. The spiral track structure is shown in a linear representation. A power sweep 32 performed on the first track 12 is shown by means of a functional representation of the laser power $\alpha$. After this power sweep 32 that consists of a plurality of discrete laser writing pluses of decreasing power, the relation between the asymmetry value and the laser power is determined. This will be further explained with respect to figure 5. After having read back the information from the first track 12, further power sweeps 34, 36 are performed on track 14, namely in the second partition 26 and the third partition 30. In the second partition, the laser power starts from a value at half maximum laser power used when writing to the partition 10 on the first track 12, and is decreased to a minimum value. When writing to partition 30 of the second track 14, the laser power starts at the maximum laser power and is decreased to half the maximum laser power. Thereby, it is achieved that neighbouring portions of the adjacent tracks have not been recorded with the same laser power. Consequently, when performing a jitter calibration on the basis of all three power sweeps, inhomogeneities of the discs are averaged out. The jitter calibration is for example performed as described in PCT/IB2004/050592 the disclosure of which is fully incorporated into the present disclosure.

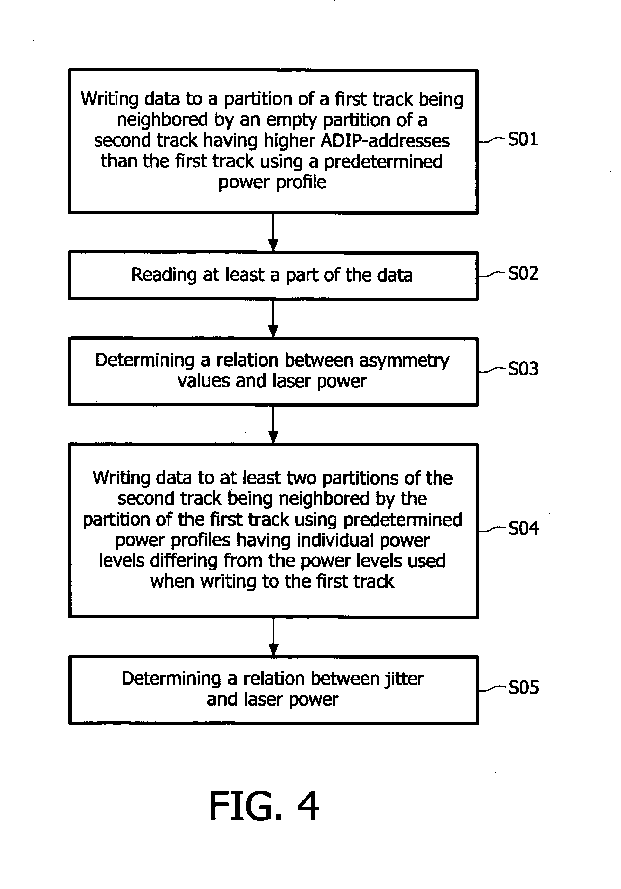

Figure 4 shows a flow diagram illustrating a writing power calibration method according to the present invention. In a first step S01, data is written on a first track being neighboured by an empty second track. A predetermined laser power profile is used during writing. The empty second track is usually the first empty track that can be found in the disc calibration zone. Thus, the second track has higher ADIP-adresses than the first track. By not using this second track, an influence on the first track used for calibration purposes is avoided.

After the writing, the data are read back in step S02. From the present information, namely the laser power profile and the read back data, a relation between $\beta$ values and the laser power can be determined in step S03.

Thereafter, data can be written to the second track, i. e. the track that previously has been left empty.

Also the writing on the second track is performed with predetermined power profiles in a re-shuffled manner as explained above (step S04). In step S05 a relation between jitter and laser power is determined. By selecting the laser power having the minimum jitter value, an optimum writing can be performed. The information concerning the relation between the $\beta$ value and the laser power can then be used during the ongoing recording process.

Figure 5 shows a functional diagram illustrating a second order polynomial fit and a $\beta$ slope determination at the optimum laser power. From writing onto the first track and reading back the data different asymmetry values can be precisely determined, i. e. without distortion from a neighbouring track. These $\beta$ values are shown as crosses. The values can be fitted by a second order polynomial fit. From this fit, the slope of the $\beta$-$\alpha$ relation can be determined at the target asymmetry value $\beta_{target}$, hence the optimum laser power $\alpha_{opt}$. This slope will then be used for the laser power correction during the ongoing recording process, namely by multiplying the observed difference between a measured $\beta$ value and a target $\beta$ value by this slope.

Figure 6 shows a flow diagram illustrating a walking optimum power control method used in connection with the present invention. During the ongoing recording process, data can be read that have previously been written (step S01). On this basis, a $\beta$ value difference $\Delta\beta_{wopc}$ between a target $\beta$ value and a measured $\beta$ value can be determined (step S02). A new laser power adapted to the current writing region of the disc can then be calculated on the basis of multiplying the slope of the $\beta$-$\alpha$ relation by the previously determined $\beta$ value difference $\Delta\beta_{wopc}$.

**Claims**

1. A method of performing a writing power calibration for optical recording on an optical storage medium having a spiral track structure, comprising the steps of:

   - selecting a first partition (10) on the track structure having a first track (12) and an adjacent second track (14) that do both not contain written information on track portions (16, 18) within the first partition (10), wherein the second track (14) may be neighboured by a third track (20) that may have a track portion (22) containing written information,
   - writing to the track portion (16) of the first track (12) within the first partition (10) using a predetermined writing power profile of a laser beam,
   - reading information written to the first track (12) within the first partition (10), and
   - determining a relation between an asymmetry value and laser power on the basis of the writing power profile and the information read from the first track (12)
wherein, after the reading step, information is written to at least a track portion (24) of the second track (14) within a second partition (26) and a track portion (28) of the second track (14) within a third partition (30) of the second track (14) using further predetermined writing power profiles, and a relation between jitter and laser power is determined on the basis of the writing power profiles and information read from the track portion (16) of the first track (12) in the first partition (10), the track portion (24) of the second track (14) in the second partition (26), and the track portion (28) of the second track (14) in the third partition (30)
**characterized in that** the size of the first partition (10) is essentially twice the size of the second partition (26) and essentially twice the size of the third partition (30).

2. The method according to claim 1, wherein the first partition (10) essentially extends over 360 degrees and the second and third partitions (26, 30) each essentially extend over 180 degrees.

3. The method according to claim 1, wherein the power values of the writing power profiles in adjacent positions of the first and the second tracks (12, 14) are different.

4. The method according to claim 1, wherein the relation between the asymmetry value $\beta$ and laser power $\alpha$ is approximated by

$$\beta = a\alpha^2 + b\alpha + c.$$

5. The method according to claim 4, wherein a walking optimum power control is performed by increasing or decreasing the laser power $\alpha$ by $\Delta\alpha$ on the basis of a difference $\Delta\beta$ between a measured asymmetry value and a target asymmetry value$_t$ using the relation

$$\Delta\alpha = \frac{\partial\alpha}{\partial\beta} \cdot \Delta\beta_{wopc}$$

wherein

$$\frac{\partial\alpha}{\partial\beta} = \frac{1}{2a\alpha_{opt} + b}.$$

**6.** The method according to claim 1, wherein the optical storage medium is a Blu-ray Disc (BD).

**7.** An apparatus for performing a writing power calibration for optical recording on an optical storage medium having a spiral track structure, comprising:

- means for selecting a first partition (10) on the track structure having a first track (12) and an adjacent second track (14) that do both not contain written information on track portions (16, 18) within the first partition (10), wherein the second track (14) may be neighboured by a third track (20) that may have a track portion (22) within the first partition (10) containing written information,
- means for writing to the track portion (16) of the first track (12) within the first partition (10) using a predetermined writing power profile of a laser beam,
- means for reading information written to the first track (12) within the first partition (10), and
- means for determining a relation between an asymmetry value and laser power on the basis of the writing power profile and the information read from the first track (12), wherein the apparatus is operative to, after performing a reading with the reading means, write information using the writing means to at least a track portion (24) of the second track (14) within a second partition (26) and a track portion (28) of the second track (14) within a third partition (30) of the second track (14) using further predetermined writing power profiles, and to determine a relation between jitter and laser power on the basis of the writing power profiles and information read from the track portion (16) of the first track (12) in the first partition (10), the track portion (24) of the second track (14) in the second partition (26), and the track portion (28) of the second track (14) in the third partition (30) **characterized in that** the size of the first partition (10) is essentially twice the size of the second partition (26) and essentially twice the size of the third partition (30).

**8.** The apparatus according to claim 7, wherein the first partition (10) essentially extends over 360 degrees and the second and third partitions (26, 30) each essentially extend over 180 degrees.

**9.** The apparatus according to claim 7, wherein the power values of the writing power profiles in adjacent positions of the first and the second tracks (12, 14) are different.

**10.** The apparatus according to claim 7, wherein the relation between the asymmetry value $\beta$ and laser power $\alpha$ is approximated by

$$\beta = a\alpha^2 + b\alpha + c.$$

**11.** The apparatus according to claim 10, wherein a walking optimum power control is performed by increasing or decreasing the laser power $\alpha$ by $\Delta\alpha$ on the basis of a difference $\Delta\beta$ between a measured asymmetry value and a target asymmetry value$_t$ using the relation

$$\Delta\alpha = \frac{\partial\alpha}{\partial\beta} \cdot \Delta\beta_{wopc}$$

wherein

$$\frac{\partial\alpha}{\partial\beta} = \frac{1}{2a\alpha_{opt} + b}.$$

**12.** The apparatus according to claim 7, wherein the optical storage medium is a Blu-ray Disc (BD).

**Patentansprüche**

**1.** Verfahren zum Durchführen einer Schreibleistungskalibrierung zur optischen Aufzeichnung auf ein optisches Speichermedium mit einer Spiralspurstruktur, wobei dieses Verfahren die nachfolgenden Verfahrensschritte umfasst:

- das Selektieren eines ersten Teils (10) der Spurstruktur mit einer ersten Spur (12) und einer angrenzenden zweiten Spur (14), die beide keine geschriebene Information in den Spurteilen (16, 18) innerhalb des ersten Teils (10) enthalten, wobei die zweite Spur (14) durch eine dritte Spur (20) benachbart wird, die einen Spurteil (22) mit geschriebener Information aufweisen kann,
- das Beschreiben des Spurteils (16) der ersten Spur (12) innerhalb des ersten Teils (10) unter Verwendung eines vorbestimmten Schreibleistungsprofils eines Laserbündels,
- das Auslesen von Information, die in die erste Spur (12) innerhalb des ersten Teils (10) eingeschrieben wurde, und
- das Bestimmen einer Beziehung zwischen einem Asymmetriewert und der Laserleistung auf Basis des Schreibleistungsprofils und der aus der ersten Spur (12) ausgelesenen Information, wobei nach dem Ausleseschritt Information in wenigstens einen Spurteil (24) der zweiten Spur (14) innerhalb des zweiten Teils (26) und in einen Spurteil (28) der zweiten Spur (14() innerhalb des dritten Teils (30) der zweiten Spur (14) eingeschrieben wird, und zwar unter Verwendung weiterer vorbestimmter Schreibleistungsprofile, und wobei auf Basis der Schreibleistungsprofile und Information, die aus dem Spurteil (16) der ersten Spur (12) in dem ersten Teil (10), dem Spurteil (24) der zweiten Spur (14) in dem zweiten Teil (26), und dem Spurteil (28) der zweiten Spur (14) in dem dritten Spurteil (30) ausgelesen wurde, eine Beziehung zwischen Jitter und Laserleistung bestimmt wird, **dadurch gekennzeichnet, dass** die Größe des ersten Teils (10) im Wesentlichen der doppelten Größe des zweiten Teils (26) und im Wesentlichen der doppelten Größe des dritten Teile (30) entspricht.

2. Verfahren nach Anspruch 1, wobei der erste Teil (10) sich im Wesentlichen über 360 Grad erstreckt und der zweite und der dritte Teil (26, 30) sich je im Wesentlichen über 180 Grad erstrecken.

3. Verfahren nach Anspruch 1, wobei die Leistungswerte der Schreibleistungsprofile in aneinander grenzenden Teilen der ersten und der zweiten Spur (12, 14) verschieden sind.

4. Verfahren nach Anspruch 1, wobei die Beziehung zwischen dem Asymmetriewert $\beta$ und der Laserleistung $\alpha$ wie folgt angenähert wird:

$$\beta = a\alpha^2 + b\alpha + c.$$

5. Verfahren nach Anspruch 4, wobei eine gleitende optimale Leistungsregelung durchgeführt wird, indem auf Basis einer Differenz $\Delta\beta$ zwischen einem gemessenen Asymmetriewert und einem angestrebten Asymmetriewert unter Anwendung der Beziehung $\Delta\alpha = \dfrac{\partial\alpha}{\partial\beta}.\Delta\beta_{\text{wopc}}$ , wobei

$\dfrac{\partial\alpha}{\partial\beta} = \dfrac{1}{2a\alpha_{\text{opt}} + b}$ ist, die Laserleistung $\alpha$ um $\Delta\alpha$ gesteigert oder verringert wird.

6. Verfahren nach Anspruch 1, wobei das optische Speichermedium eine "Blu-ray-Disc" (BD) ist.

7. Einrichtung zum Durchführen einer Schreibleistungskalibrierung zur optischen Aufzeichnung auf ein optisches Speichermedium mit einer Spiralspurstruktur, wobei diese Einrichtung Folgendes umfasst:

- Mittel zum Selektieren eines ersten Teils (10) der Spurstruktur mit einer ersten Spur (12) und einer angrenzenden zweiten Spur (14), die beide keine geschriebene Information in den Spurteilen (16, 18) innerhalb des ersten Teils (10) enthalten, wobei die zweite Spur (14) durch eine dritte Spur (20) benachbart wird, die einen Spurteil (22) mit geschriebener Information aufweisen kann,
- Mittel zum Beschreiben des Spurteils (16) der ersten Spur (12) innerhalb des ersten Teils (10) unter Verwendung eines vorbestimmten Schreibleistungsprofils eines Laserbündels,
- Mittel zum Auslesen von Information, die in die erste Spur (12) innerhalb des ersten Teils (10) eingeschrieben wurde, und
- Mittel zum Bestimmen einer Beziehung zwischen einem Asymmetriewert und der Laserleistung auf Basis des Schreibleistungsprofils und der aus der ersten Spur (12) ausgelesenen Information,
wobei nach dem Ausleseschritt Information in wenigstens einen Spurteil (24) der zweiten Spur (14) innerhalb des zweiten Teils (26) und in einen Spurteil (28) der zweiten Spur (14() innerhalb des dritten Teils (30) der zweiten Spur (14) eingeschrieben wird, und zwar unter Verwendung weiterer vorbestimmter Schreibleistungsprofile, und wobei auf Basis der Schreibleistungsprofile und Information, die aus dem Spurteil (16) der ersten Spur (12) in dem ersten Teil (10), dem Spurteil (24) der zweiten Spur (14) in dem zweiten Teil (26), und dem Spurteil (28) der zweiten Spur (14) in dem dritten Spurteil (30) ausgelesen wurde, eine Beziehung zwischen Jitter und Laserleistung bestimmt wird, **dadurch gekennzeichnet, dass** die Größe des ersten Teils (10) im Wesentlichen der doppelten Größe des zweiten Teils (26) und im Wesentlichen der doppelten Größe des dritten Teile (30) entspricht.

8. Einrichtung nach Anspruch 7, wobei der erste Teil (10) sich im Wesentlichen über 360 Grad erstreckt und der zweite und der dritte Teil (26, 30) sich je im Wesentlichen über 180 Grad erstrecken.

9. Einrichtung nach Anspruch 7, wobei die Leistungswerte der Schreibleistungsprofile in aneinander grenzenden Teilen der ersten und der zweiten Spur (12, 14) verschieden sind.

10. Einrichtung nach Anspruch 7, wobei die Beziehung zwischen dem Asymmetriewert $\beta$ und der Laserleistung $\alpha$ wie folgt angenähert wird:

$$\beta = a\alpha^2 + b\alpha + c.$$

**11.** Einrichtung nach Anspruch 10, wobei eine gleitende optimale Leistungsregelung durchgeführt wird, indem auf Basis einer Differenz $\Delta\beta$ zwischen einem gemessenen Asymmetriewert und einem angestrebten Asymmetriewert unter Anwendung der Beziehung $\Delta\alpha = \dfrac{\partial\alpha}{\partial\beta}.\Delta\beta_{wopc}$, wobei

$\dfrac{\partial\alpha}{\partial\beta} = \dfrac{1}{2a\alpha_{opt} + b}$ ist, die Laserleistung $\alpha$ um $\Delta\alpha$ gesteigert oder verringert wird.

**12.** Einrichtung nach Anspruch 7, wobei das optische Speichermedium eine "Blu-ray-Disc" (BD) ist.

**Revendications**

**1.** Procédé d'exécution d'un étalonnage de puissance d'écriture pour un enregistrement optique sur un support de stockage optique ayant une structure de pistes en spirale, comprenant les étapes consistant à :

- sélectionner une première partition (10) sur la structure de pistes ayant une première piste (12) et une deuxième piste adjacente (14) qui l'une et l'autre ne contiennent pas d'informations écrites sur des parties de piste (16, 18) au sein de la première partition (10), dans lequel la deuxième piste (14) peut être bordée par une troisième piste (20) qui peut avoir une partie de piste (22) contenant des informations écrites,

- écrire sur la partie de piste (16) de la première piste (12) au sein de la première partition (10) en utilisant un profil de puissance d'écriture prédéterminé d'un faisceau laser,

- lire les informations écrites sur la première piste (12) au sein de la première partition (10), et

- déterminer une relation entre un valeur d'asymétrie et une puissance laser sur la base du profil de puissance d'écriture et des informations lues de la première piste (12)

dans lequel, après l'étape de lecture, une information est écrite sur au moins une partie de piste (24) de la deuxième piste (14) au sein d'une deuxième partition (26) et une partie de piste (28) de la deuxième piste (14) au sein d'une troisième partition (30) de la deuxième piste (14) en utilisant d'autres profils de puissance d'écriture prédéterminés, et une relation entre le sautillement et la puissance laser est déterminée sur la base des profils de puissance d'écriture et des informations lues à partir de la partie de piste (16) de la première piste (12) dans la première partition (10), la partie de piste (24) de la deuxième piste (14) dans la deuxième partition (26), et la partie de piste (28) de la deuxième piste (14) dans la troisième partition (30) **caractérisé en ce que** la taille de la première partition (10) est pratiquement deux fois la taille de la deuxième partition (26) et pratiquement deux fois la taille de la troisième partition (30).

**2.** Procédé selon la revendication 1, dans lequel la première partition (10) s'étend pratiquement sur 360 degrés et les deuxième et troisième partitions (26, 30) s'étendent chacune pratiquement sur 180 degrés.

**3.** Procédé selon la revendication 1, dans lequel les valeurs de puissance des profils de puissance d'écriture dans des positions adjacentes des première et deuxième pistes (12, 14) sont différentes.

**4.** Procédé selon la revendication 1, dans lequel la relation entre la valeur d'asymétrie $\beta$ et la puissance laser $\alpha$ est approchée par

$$\beta = a\alpha^2 + b\alpha + c.$$

**5.** Procédé selon la revendication 4, dans lequel un contrôle de puissance optimal de marche est effectué en augmentant ou en diminuant la puissance laser $\alpha$ de $\Delta\alpha$ sur la base d'une différence $\Delta\beta$ entre une valeur d'asymétrie mesurée et une valeur$_t$ d'asymétrie cible en utilisant la relation

$$\Delta\alpha = \frac{\partial\alpha}{\partial\beta} \cdot \Delta\beta_{wopc}$$

où

$$\frac{\partial\alpha}{\partial\beta} = \frac{1}{2a\alpha_{opt} + b}.$$

**6.** Procédé selon la revendication 1, dans lequel le support de stockage optique est un Blu-ray Disc (BD).

**7.** Appareil destiné à l'exécution d'un étalonnage de puissance d'écriture pour un enregistrement optique sur un support de stockage optique ayant une structure de pistes en spirale, comprenant :

- des moyens destinés à sélectionner une première partition (10) sur la structure de pistes ayant une première piste (12) et une deuxième piste adjacente (14) qui l'une et l'autre ne contiennent pas d'informations écrites sur des parties de piste (16, 18) au sein de la première partition (10), dans lequel la deuxième piste (14) peut être bordée par une troisième piste (20) qui peut avoir une partie de piste (22) au sein de la première partition (10) contenant des informations écrites,

- des moyens destinés à écrire sur la partie de piste (16) de la première piste (12) au sein de la première partition (10) en utilisant un profil de puissance d'écriture prédéterminé d'un faisceau laser,

- des moyens destinés à lire les informations écrites sur la première piste (12) au sein de la première partition (10), et

- des moyens destinés à déterminer une relation entre une valeur d'asymétrie et la puissance laser sur la base du profil de puissance d'écriture et des informations lues à partir de la première piste (12), où l'appareil est efficace pour, après avoir exécuté une lecture avec les moyens de lecture, écrire des informations en utilisant les moyens d'écriture sur au moins une partie de piste (24) de la deuxième piste (14) au sein d'une deuxième partition (26) et une partie de piste (28) de la deuxième piste (14) au sein d'une troisième partition (30) de la deuxième piste (14) en utilisant d'autres profils de puissance d'écriture prédéterminés, et pour déterminer une relation entre le sautillement et la puissance laser sur la base des profils de puissance d'écriture et des informations lues à partir de la partie de piste (16) de la première piste (12) dans la première partition (10), la partie de piste (24) de la deuxième piste (14) dans la deuxième partition (26), et la partie de piste (28) de la deuxième piste (14) dans la troisième partition (30) **caractérisé en ce que** la taille de la première partition (10) est pratiquement deux fois la taille de la deuxième partition (26) et pratiquement deux fois la taille de la troisième partition (30).

8. Appareil selon la revendication 7, dans lequel la première partition (10) s'étend pratiquement sur 360 degrés et les deuxième et troisième partitions (26, 30) s'étendent chacune pratiquement sur 180 degrés.

9. Appareil selon la revendication 7, dans lequel les valeurs de puissance des profils de puissance d'écriture dans des positions adjacentes des première et deuxième pistes (12, 14) sont différentes.

10. Appareil selon la revendication 7, dans lequel la relation entre la valeur d'asymétrie $\beta$ et la puissance

laser $\alpha$ est approchée par

$$\beta = a\alpha^2 + b\alpha + c.$$

11. Appareil selon la revendication 10, dans lequel un contrôle de puissance optimal de marche est effectué en augmentant ou en diminuant la puissance laser $\alpha$ de $\Delta\alpha$ sur la base d'une différence $\Delta\beta$ entre une valeur d'asymétrie mesurée et une valeur$_t$ d'asymétrie cible en utilisant la relation

$$\Delta\alpha = \frac{\partial\alpha}{\partial\beta} \cdot \Delta\beta_{wopc}$$

où

$$\frac{\partial\alpha}{\partial\beta} = \frac{1}{2a\alpha_{opt} + b}.$$

12. Appareil selon la revendication 7, dans lequel le support de stockage optique est un Blu-ray Disc (BD).

FIG. 1

FIG. 2

FIG. 3

```
┌─────────────────────────────────────────┐
│  Writing data to a partition of a first  │
│  track being neighbored by an empty      │
│  partition of a second track having      │──── S01
│  higher ADIP-addresses than the first    │
│  track using a predetermined             │
│  power profile                           │
└─────────────────────────────────────────┘
                    │
                    ▼
┌─────────────────────────────────────────┐
│      Reading at least a part of the data │──── S02
└─────────────────────────────────────────┘
                    │
                    ▼
┌─────────────────────────────────────────┐
│  Determining a relation between asymmetry│──── S03
│         values and laser power           │
└─────────────────────────────────────────┘
                    │
                    ▼
┌─────────────────────────────────────────┐
│  Writing data to at least two partitions │
│  of the second track being neighbored by │
│  the partition of the first track using  │
│  predetermined power profiles having     │──── S04
│  individual power levels differing from  │
│  the power levels used when writing to   │
│  the first track                         │
└─────────────────────────────────────────┘
                    │
                    ▼
┌─────────────────────────────────────────┐
│  Determining a relation between jitter   │──── S05
│          and laser power                 │
└─────────────────────────────────────────┘
```

# FIG. 4

$\beta = a \cdot \alpha^2 + b \cdot \alpha + c$

## FIG. 5

Reading data previously written during ongoing recording process — S01

Determining an asymmetry value difference $\Delta\beta_{wopc}$ between a measured and a theoretical asymmetry — S02

Calculating a new laser power $\alpha$ on the basis of a power difference
$$\Delta\alpha = \frac{\partial\alpha}{\partial\beta} \cdot \Delta\beta_{wopc}$$
— S03

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006072419 A1